# EUROPÄISCHE PATENTANMELDUNG

(11) **EP 2 784 911 A1**
(43) Veröffentlichungstag der Anmeldung: **01.10.2014**
(21) Anmeldenummer: 13001589.4
(22) Anmeldetag: 27.03.2013
(51) Int. Cl.: H02K 3/38

(54) **Stator für einen Hochtemperaturelektromotor sowie Elektromotor**

(71) Anmelder: Maxon Motor AG, 6072 Sachseln (CH)
(72) Erfinder: Brzuska, Yaaqub, 6003 Luzern (CH); Stubicar, Kornelia, 6332 Hagendorn (CH); Aschwanden, Pia, 6415 Arth (CH); Hänni, Tobias, 6003 Luzern (CH); Hage, Bernd, 6072 Sachseln (CH); Fürderer, Bernd, 6074 Giswil (CH)
(74) Vertreter: Grünecker, Kinkeldey, Stockmair & Schwanhäusser

(57) **Zusammenfassung**

Die vorliegende Erfindung betrifft einen Stator für einen Elektromotor zum Einsatz bei sehr hohen Temperaturen von bis zu 550 °C. Der Stator umfasst eine Statorwicklung mit einer Achse und mit mehreren an einem Stirnende der Statorwicklung heraus geführten Wicklungsdrahtenden. Ferner umfasst der Stator eine Statorwicklungsverschaltung mit mehreren Ringleitern, die am Stirnende der Statorwicklung koaxial zu dieser angeordnet und axial voneinander beabstandet sind. Die Ringleiter dienen zur elektrischen Kontaktierung der Wicklungsdrahtenden. Erfindungsgemäß ist vorgesehen, dass zwischen axial aufeinanderfolgenden Ringleitern jeweils ein elektrisch isolierender Zwischenring vorgesehen ist, wobei die Ringleiter und die Zwischenringe abwechselnd aufeinander geschichtet sind.

## Beschreibung

Die vorliegende Erfindung betrifft einen Stator für einen Elektromotor nach dem Oberbegriff des unabhängigen Anspruchs 1.

Ein derartiger Stator umfasst eine Statorwicklung mit einer Achse und mit mehreren an einem Stirnende der Statorwicklung herausgeführten Wicklungsdrahtenden. Der Stator umfasst ferner eine Statorwicklungsverschaltung mit mehreren Ringleitern, die am Stirnende der Statorwicklung koaxial zu dieser angeordnet und axial voneinander beabstandet sind. Die Ringleiter sind zur elektrischen Kontaktierung der Wicklungsdrahtenden vorgesehen.

Aus DE 10 2004 050374 A1 ist ein Elektromotor mit einer Statorwicklungsverschaltung bekannt, die mehrere Ringleiter umfasst. Der Elektromotor ist als Innenläufermotor ausgeführt. Bei dem Stator des Elektromotors handelt es sich um einen herkömmlichen genuteten Stator, bestehend aus einem hohlzylindrischen Eisenkern mit mehreren radial abstehenden Zähnen, auf die die einzelnen Spulen der Statorwicklung aufgewickelt sind. Der Stator ist von einem hohlzylindrischen Gehäuse umgeben, in das auch die Ringleiter der Statorwicklungsverschaltung eingesetzt sind. Die Ringleiter sind aus Kupferblech ausgestanzt und weisen jeweils eine axial abgebogene Anschlussfahne zur externen elektrischen Kontaktierung auf. Sämtliche Ringleiter sind an einem Stirnende der Statorwicklung angeordnet und in das hohlzylindrische Gehäuse des Elektromotors eingesetzt. In der Innenwand des Gehäuses sind diverse Ausnehmungen bzw. Stufen ausgebildet, die als Anschlag für die Ringleiter dienen. Die Stufen der Gehäuseinnenwand sorgen dafür, dass die Ringleiter axial beabstandet voneinander in dem Gehäuse gehalten sind. Jeweils ein Wicklungsdrahtende der Statorwicklung ist mit einem der Ringleiter verlötet.

Die in DE 10 2004 050374 A1 beschriebene Statorwicklungsverschaltung erfordert eine spezielle Ausgestaltung des Elektromotorgehäuses, was eine aufwändige Fertigung des Gehäuses erforderlich macht. Zudem kann der Motor nicht ohne dieses speziell ausgestaltete Gehäuse aufgebaut werden. Um zu gewährleisten, dass die einzelnen Ringleiter ausreichend elektrisch gegeneinander isoliert sind, muss zwischen den axial aufeinanderfolgend angeordneten Ringleitern ein gewisser Mindestabstand zuzüglich Sicherheitszuschlag bestehen. Der in DE 10 2004 050374 A1 beschriebene Elektromotor baut daher in axialer Richtung relativ lang.

Die DE 10 2011 100863 A1 und die DE 2011 100843 A1 offenbaren jeweils einen Elektromotor mit einer Statorwicklungsverschaltung, die mehrere kreisringabschnittsförmig ausgebildete sogenannte Schienenteile umfasst. Ähnlich wie die Ringleiter aus DE 10 2004 050374 A1 sind die kreisringabschnittsförmig ausgebildeten Schienenteile axial voneinander beabstandet an einem Stirnende der Statorwicklung angeordnet und jeweils mit einem Wicklungsdrahtende der Statorwicklung elektrisch kontaktiert. Jedes der kreisringabschnittsförmig ausgebildeten Schienenteile weist eine axial abstehende Lasche auf, die zur externen elektrischen Kontaktierung dient. Die Schienenteile sind nicht nur in axialer Richtung voneinander beabstandet, sondern auch in Umfangsrichtung gegeneinander versetzt. Die Statorwicklung und die am Stirnende der Statorwicklung angeordneten Schienenteile sind mit einer elektrisch isolierenden Vergussmasse vergossen, wobei jedoch die axial abgebogenen Laschen der kreisringabschnittsförmig ausgebildeten Schienenteile aus der Vergussmasse herausragen.

Der in DE 10 2011 100863 A1 bzw. DE 10 2011 100843 A1 beschriebene Elektromotor ist relativ aufwändig herzustellen, da die kreisringabschnittsförmig ausgebildeten Schienenteile exakt auf Abstand gehalten werden müssen, bevor sie zusammen mit der Statorwicklung mit der elektrisch isolierenden Vergussmasse vergossen werden.

Es ist Aufgabe der vorliegenden Erfindung, den Stator der gattungsgemäßen Art derart weiterzubilden, dass sich der Stator besonders einfach herstellen lässt und eine für Hochtemperaturanwendungen ausreichende Stabilität aufweist.

Die Aufgabe wird gelöst durch die Merkmale des unabhängigen Anspruchs 1. Demnach liegt bei einem Stator der gattungsgemäßen Art dann eine erfindungsgemäße Lösung der Aufgabe vor, wenn zwischen axial aufeinanderfolgenden Ringleitern jeweils ein elektrisch isolierender Zwischenring vorgesehen ist, wobei die Ringleiter und die Zwischenringe abwechselnd aufeinander geschichtet sind.

Die Erfindung bietet den Vorteil, dass der Stator äußerst einfach hergestellt werden kann. Ein spezielles Gehäuse zur Positionierung und Halterung der einzelnen Ringleiter ist nicht erforderlich. Auch müssen die Ringleiter bei der Herstellung nicht auf Abstand gehalten werden, der optimale Abstand zwischen den Ringleitern ergibt sich aufgrund der dazwischen angeordneten Zwischenringe automatisch. Der erforderliche Abstand zwischen aufeinanderfolgenden Ringleitern kann in Abhängigkeit des Materials der isolierenden Zwischenringe exakt berechnet werden. Die Zwischenringe werden auf dieses exakt berechnete Maß gefertigt, so dass, anders als bei den aus dem Stand der Technik bekannten Statorwicklungsverschaltungen, keine zusätzlichen Sicherheits- bzw. Toleranzzugaben erforderlich werden. Die Statorwicklungsverschaltung baut daher in axialer Richtung äußerst kompakt, was letztendlich zu einer kompakten Bauweise des gesamten Elektromotors führt. Die isolierenden Zwischenringe sorgen ferner für einen stabilen Zusammenhalt, so dass sich der erfindungsgemäße Stator auch und insbesondere für Hochtemperaturanwendungen eignet. Die Ringleiter bestehen aus Metall und sind vorzugsweise aus Kupfer gefertigt. Eine besonders einfache und kostengünstige Fertigung ergibt sich, wenn die Ringleiter als Blechstanzteile aus einem Metallblech ausgestanzt werden.

Vorteilhafte Ausgestaltungen der vorliegenden Erfindung sind Gegenstand der Unteransprüche.

In einer besonders bevorzugten Ausführungsform der vorliegenden Erfindung bestehen die Zwischenringe aus einer Keramik. Isolierende Keramikringe können äußerst präzise gefertigt werden und weisen eine sehr hohe Stabilität auf, was den erfindungsgemäßen Stator für Hochtemperaturanwendungen prädestiniert. Bevorzugt handelt es sich bei der Keramik um eine Oxidkeramik. In Bezug auf Stabilität und hinsichtlich der isolierenden Eigenschaften hat sich Zirkoniumoxid als besonders geeignetes Material für die Zwischenringe herausgestellt.

In einer weiteren besonders bevorzugten Ausführung der vorliegenden Erfindung sind die Wicklungsdrahtenden, die Ringleiter und die Zwischenringe mit einer isolierenden aushärtenden Vergussmasse vergossen. Durch die aushärtende Vergussmasse sind die einzelnen Bauteile stabil miteinander verbunden. Dadurch wird insgesamt eine kompakte und stabile Bauweise erzielt. Sofern die Statorwicklung als hohlzylindrische eisenlose Statorwicklung ausgeführt ist, kann der durch die Vergussmasse erzeugte Verbund zwischen den Ringleitern, den Zwischenringen und den Wicklungsdrahtenden als Wicklungsträger dienen. Vorzugsweise handelt es sich bei der isolierenden aushärtenden Vergussmasse um einen keramischen Kleber, der für Klebeverbindungen von Keramik zu Keramik und von Keramik zu Metall geeignet ist. Der keramische Kleber gewährleistet auch bei sehr hohen Einsatztemperaturen von bis 550 °C einen stabilen Zusammenhalt. Die Vergussmasse umgibt die Ringleiter und die Zwischenringe vorzugsweise komplett, wobei allerdings die Anschlusslaschen der Ringleiter aus der Vergussmasse herausragen, so dass die externe elektrische Kontaktierung vorgenommen werden kann.

Weiter bevorzugt ist die Vergussmasse radial durch eine Ringhülse begrenzt, wobei die Ringhülse die Ringleiter und die Zwischenringe umgibt. Die Ringhülse erleichtert das Vergießen der Ringleiter und der Zwischenringe mit der elektrisch isolierenden aushärtenden Vergussmasse. Durch die Ringhülse kann die äußere Kontur der Statorwicklungsverschaltung exakt vorgegeben werden, so dass die Statorwicklung zusammen mit der Statorwicklungsverschaltung später in ein exakt angepasstes Gehäuse des Elektromotors eingesetzt werden kann. Vorzugsweise besteht auch die Ringhülse aus einer Keramik, wodurch ein äußerst kompakter und stabiler Zusammenhalt gewährleistet wird. Bei Verwendung eines keramischen Klebers als Vergussmasse geht die keramische Ringhülse eine sehr innige Verbindung mit der Vergussmasse ein. Vorzugsweise besteht auch die Ringhülse aus einer Oxidkeramik, vorzugsweise aus Zirkoniumoxid.

In einer weiteren bevorzugten Ausführungsform der vorliegenden Erfindung weisen die Ringleiter jeweils zumindest eine radial abstehende Lasche zur elektrischen Kontaktierung eines der Wicklungsdrahtenden auf. Dadurch wird die elektrische Kontaktierung zwischen den Wicklungsdrahtenden und den Ringleitern bei der Herstellung des erfindungsgemäßen Stators erheblich erleichtert. Ganz besonders bevorzugt weisen die Ringleiter jeweils zwei Laschen zur elektrischen Kontaktierung von zwei Wicklungsdrahtenden auf, wobei die beiden Laschen eines Ringleiters in Umfangsrichtung voneinander beabstandet an unterschiedlichen Positionen angeordnet sind. Dadurch ergibt sich eine sehr platzsparende und einfach herzustellende Verschaltung der einzelnen Spulen der Statorwicklung.

In einer besonders bevorzugten Ausführungsform der vorliegenden Erfindung weisen die Laschen jeweils eine im Wesentlichen in Umfangsrichtung oder tangential verlaufende Ausnehmung auf. Dadurch wird die elektrische Kontaktierung der Wicklungsdrahtenden weiter erleichtert. Ganz besonders bevorzugt sind zugehörige Wicklungsdrahtenden und Ausnehmungen im gleichen radialen Abstand zur Achse angeordnet, wobei die Wicklungsdrahtenden durch die Ausnehmungen hindurch geführt und auf die zugehörige Lasche umgebogen sind. Die Statorwicklung kann dabei so ausgebildet sein, dass die Wicklungsdrahtenden an einem Stirnende der Statorwicklung auf einfache Weise axial herausgeführt werden. Zur elektrischen Kontaktierung der Wicklungsdrahtenden werden die Ringleiter entweder einzeln abwechselnd mit den dazwischen angeordneten Zwischenringen oder im Paket auf das Stirnende der Statorwicklung aufgesetzt, so dass sich die Wicklungsdrahtenden in Umfangsrichtung betrachtet zwischen den Laschen der Ringleiter befinden. Anschließend werden die Ringleiter um die Achse der Statorwicklung gedreht, so dass die Wicklungsdrahtenden in die Ausnehmungen der Laschen eingreifen. Die Wicklungsdrahtenden müssen dann lediglich noch auf die zugehörige Lasche umgebogen und an der Lasche geeignet befestigt werden. Erst nach der elektrischen Kontaktierung der Wicklungsdrahtenden werden die Ringleiter und die isolierenden Zwischenringe zusammen mit den Wicklungsdrahtenden vergossen. Besonders einfach gestaltet sich die elektrische Kontaktierung der Wicklungsdrahtenden, wenn alle Wicklungsdrahtenden und Ausnehmungen der Laschen auf einem Kreis angeordnet, und vorzugsweise gleichmäßig über den Umfang verteilt sind.

Eine besonders kompakte Bauweise ergibt sich, wenn die Laschen der Ringleiter radial nach außen abstehen. Dadurch wird auch die elektrische Kontaktierung der Wicklungsdrahtenden weiter erleichtert. Zudem müssen die Ringleiter und die Zwischenringe bei dieser Ausführungsform nur außen miteinander vergossen werden.

In einer weiteren bevorzugten Ausführungsform der vorliegenden Erfindung sind die Wicklungsdrahtenden mit den zugehörigen Laschen verschweißt. Eine Schweißverbindung ist im Gegensatz zu anderen elektrischen Verbindungstechniken äußerst temperaturstabil und eignet sich daher auch für Hochtemperaturanwendungen.

In einer weiteren bevorzugten Ausführungsform der vorliegenden Erfindung weisen zumindest zwei der Ringleiter eine axial abgebogene Anschlusslasche zur externen elektrischen Kontaktierung auf. Die Anschlusslaschen ragen in axialer Richtung aus der Vergussmasse heraus, so dass die externe elektrische Kontaktierung auch nachträglich vorgenommen werden kann. Wie viele der Ringleiter eine axial abgebogene Anschlusslasche aufweisen müssen, hängt von der Anzahl der Phasenwicklungen und der Art der Verschaltung ab. Vorzugsweise ist die Statorwicklung dreiphasig ausgeführt, wobei drei der Ringleiter eine axial abgebogene Anschlusslasche aufweisen.

In einer weiteren besonders bevorzugten Ausführungsform der vorliegenden Erfindung umfasst der Stator einen Wicklungsträgerring, der zwischen der Statorwicklung und den aufeinander geschichteten Ringleitern angeordnet ist und mehrere Bohrungen aufweist, durch welche die Wicklungsdrahtenden hindurch geführt sind. Diese Ausführungsform eignet sich ganz besonders bei eisenlosen hohlzylindrischen Statorwicklungen, die selbsttragend ausgeführt sind und durch den Trägerring im Gehäuse gehalten werden. Sofern die Ringleiter, die Zwischenringe und die Wicklungsdrahtenden mit einer Vergussmasse vergossen sind, kann der dadurch entstandene Verbund bereits als Wicklungsträger dienen. Durch den Wicklungsträgerring wird die Stabilität des erfindungsgemäßen Stators jedoch nochmals erheblich erhöht. Der Wicklungsträgerring ist vorzugsweise als Substratring ausgeführt und besteht bevorzugt aus einer Keramik. Auch hier kommen vorzugsweise Oxidkeramiken zum Einsatz. Ganz besonders bevorzugt besteht der Trägerring aus Zirkoniumoxid. Für einen besonders stabilen Zusammenhalt ist der Wicklungsträgerring zumindest an derjenigen Stirnseite, die der Statorwicklungsverschaltung zugewandt ist, zumindest teilweise ebenfalls mit der Vergussmasse vergossen. Der Wicklungsträgerring schließt vorzugsweise axial an die oben erwähnte Ringhülse an. Weiter vorzugsweise schließen Ringhülse und Wicklungsträgerring auch in radialer Richtung bündig ab, so dass der Stator auf einfache Weise in ein hohlzylindrisches Gehäuse eingesetzt werden kann.

In einer weiteren bevorzugten Ausführungsform der vorliegenden Erfindung ist die Statorwicklung in radialer Richtung durch eine innerhalb der Statorwicklung angeordnete Stützhülse abgestützt, wobei die Stützhülse in eine Aufnahmeausnehmung des Wicklungsträgerrings eingesteckt ist. Die Stützhülse schützt den Rotor des Elektromotors vor Verunreinigungen, die durch Hitzeentwicklung insbesondere bei Hochtemperaturanwendungen entstehen können. Derartige Verunreinigungen entstehen beispielsweise durch schmelzenden oder verdampfenden Backlack der Statorwicklung. Durch die Stützhülse wird zudem die Stabilität der Statorwicklung erhöht. So können auch bei Hochtemperaturanwendungen hohlzylindrische eisenlose Statorwicklungen zum Einsatz kommen, die eine äußerst kompakte Bauweise des Elektromotors ermöglichen und zudem einen hohen Wirkungsgrad gewährleisten. Vorzugsweise ist auch die Stützhülse aus einer Keramik gefertigt. Vorzugsweise kommen Oxidkeramiken zum Einsatz, besonders bevorzugt Zirkoniumoxid.

In einer weiteren bevorzugten Ausführungsform der vorliegenden Erfindung weist die Statorwicklung drei Phasenwicklungen auf, die in einer Dreiecksschaltung miteinander verschaltet sind. Die Statorwicklung kann jedoch auch nur zwei Phasenwicklungen oder mehr als drei Phasenwicklungen umfassen. Statt einer Dreiecksschaltung ist beispielsweise auch eine Sternschaltung denkbar.

Die Erfindung stellt ferner einen Elektromotor mit einem erfindungsgemäßen Stator zur Verfügung. Der Elektromotor ist für Hochtemperaturanwendungen bei Einsatztemperaturen von bis zu 550 °C geeignet. Vorzugsweise ist der Elektromotor als Elektrokleinmotor mit einem Durchmesser im Bereich von 4 mm bis 65 mm ausgeführt. Besonders bevorzugt beträgt der Durchmesser des Elektrokleinmotors zwischen 16 mm und 40 mm. Mögliche Anwendungen des erfindungsgemäßen Elektromotors ergeben sich in den Bereichen Luft- und Raumfahrt, Fahrzeug- und Flugzeugbau, Rohstoffförderung und .-verarbeitung, insbesondere in der Erdölindustrie für Versuchs- und Erkundungsbohrungen nach Erdöl und Erdgas, sowie in der Kraftwerkstechnik.

Ein Ausführungsbeispiel der vorliegenden Erfindung wird im Folgenden anhand von Zeichnungen näher erläutert.

Es zeigen:
- Fig. 1: einen Längsschnitt durch einen Elektromotor mit einem erfindungsgemäßen Stator,
- Fig. 2: eine perspektivische Detailansicht der Statorwicklungsverschaltung des erfindungsgemäßen Stators aus Fig. 1,
- Fig. 3: eine Explosionsdarstellung der Statorwicklungsverschaltung aus Fig. 2,
- Fig. 4: eine Draufsicht auf die Statorwicklungsverschaltung aus den Fig. 2 und 3 in einem ersten Stadium der Montage,
- Fig. 5: die Ansicht aus Fig. 4 in einem zweiten Stadium der Montage,
- Fig. 6: die Ansicht aus den Fig. 4 und 5 in einem dritten Stadium der Montage,
- Fig. 7: dieselbe Ansicht in einem vierten Stadium der Montage,
- Fig. 8: die Statorwicklungsverschaltung in einem fünften Stadium der Montage, und
- Fig. 9: eine Draufsicht auf die fertiggestellte Statorwicklungsverschaltung.

Für die folgenden Ausführungen gilt, dass gleiche Teile durch gleiche Bezugszeichen bezeichnet sind. Sofern in einer Abbildung Bezugszeichen enthalten sind, auf die in der zugehörigen Figurenbeschreibung nicht eingegangen wird, so wird auf vorangehende oder nachfolgende Figurenbeschreibungen Bezug genommen.

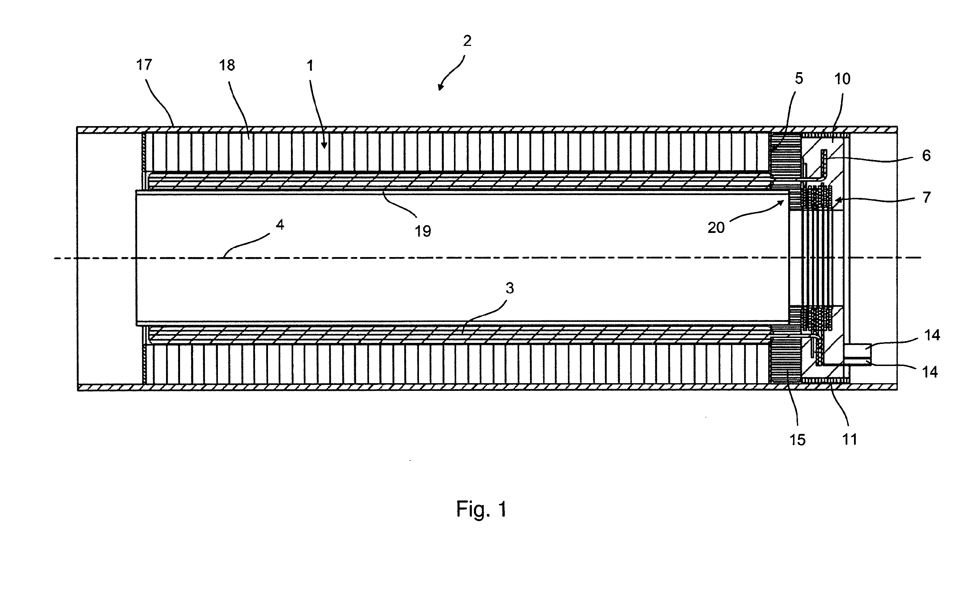

Fig. 1 zeigt einen Längsschnitt durch einen Elektrokleinmotor, der für Hochtemperaturanwendungen bis zu 550 °C ausgelegt ist. Von dem Elektromotor 2 sind lediglich das Gehäuse 17 und der Stator 1 gezeigt, der Rotor des Elektromotors ist in der Abbildung nicht dargestellt. Der Stator 1 umfasst eine hohlzylindrische eisenlose Statorwicklung 3, die von einem ebenfalls hohlzylindrisch ausgebildeten magnetischen Rückschluss 18 umgeben ist. Der Außenrückschluss 18 liegt am Außenumfang der eisenlosen Statorwicklung 3 an. Statorwicklung 3 und Rückschluss 18 sind daher koaxial zueinander angeordnet und weisen die gemeinsame Achse 4 auf. Die Statorwicklung 3 ist im Wesentlichen selbsttragend ausgeführt und beispielsweise aus einem Backlackdraht aufgewickelt. Zur Erhöhung der Stabilität ist die Statorwicklung 3 durch eine innerhalb der Statorwicklung angeordnete Stützhülse 19 abgestützt. Die Stützhülse 19 besteht aus einer Keramik, vorzugsweise aus Zirkoniumoxid, und schützt den nicht dargestellten Rotor des Kleinelektromotors vor Verunreinigungen. Ferner sorgt die Stützhülse 19 dafür, dass die Statorwicklung auch bei sehr hohen Einsatztemperaturen ihre Form beibehält. Das Gehäuse 17 des Elektromotors wird durch eine hohlzylindrische Hülse gebildet, in die der Stator 1 eingesetzt ist. Am rechten Stirnende 5 der Statorwicklung 3 ist ein Wicklungsträgerring 15 angeordnet, durch den die Statorwicklung 3 im Gehäuse 17 des Elektromotors gehalten ist. Der Wicklungsträgerring 15 liegt in axialer Richtung direkt am rechten Stirnende 5 der Statorwicklung 3 an. Die Stützhülse 19 erstreckt sich im Wesentlichen über die gesamte Länge der Statorwicklung und ragt am rechten Stirnende 5 darüber hinaus in eine stufenförmige Aufnahmeausnehmung 20 des Wicklungsträgerrings hinein. Die Stützhülse kann beispielsweise mit dem Wicklungsträgerring verklebt sein.

An den Wicklungsträgerring 15 schließt sich in axialer Richtung eine Statorwicklungsverschaltung 7 an, mittels derer die Wicklungsdrahtenden 6 der Statorwicklung 3 geeignet miteinander verschaltet sind. Die Statorwicklungsverschaltung 7 ist zusammen mit dem Wicklungsträgerring 15 in den nachfolgenden Abbildungen näher dargestellt. In Fig. 1 ist zu erkennen, dass die Statorwicklungsverschaltung 7 von einer Ringhülse 11 umgeben ist, die in axialer Richtung ebenfalls an den Wicklungsträgerring 15 anschließt und in radialer Richtung bündig mit dem Wicklungsträgerring 15 abschließt. Die Statorwicklungsverschaltung 7 ist mit einer elektrisch isolierenden Vergussmasse 10, bestehend aus einem keramischen Kleber, vergossen. Die Vergussmasse 10 verbindet die Teile der Statorwicklungsverschaltung fest mit den Wicklungsdrahtenden 6, dem Wicklungsträgerring 15 und der Ringhülse 11. Wicklungsträgerring 15 und Ringhülse 11 bestehen ebenso wie die Stützhülse 19 aus einer Keramik, vorzugsweise aus Zirkoniumoxid.

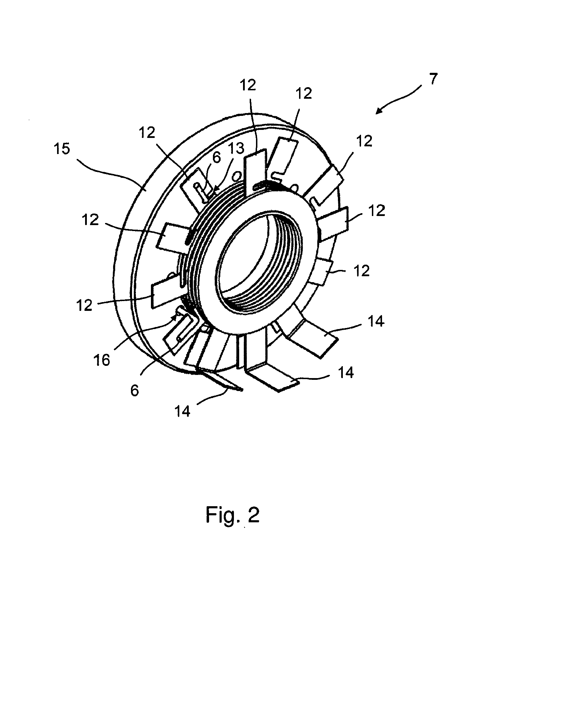

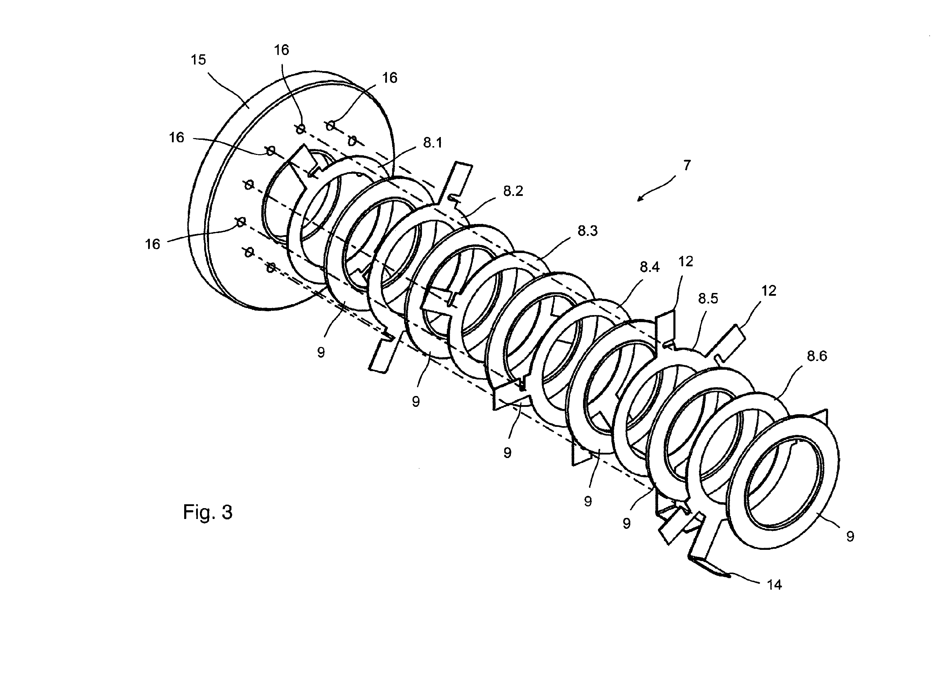

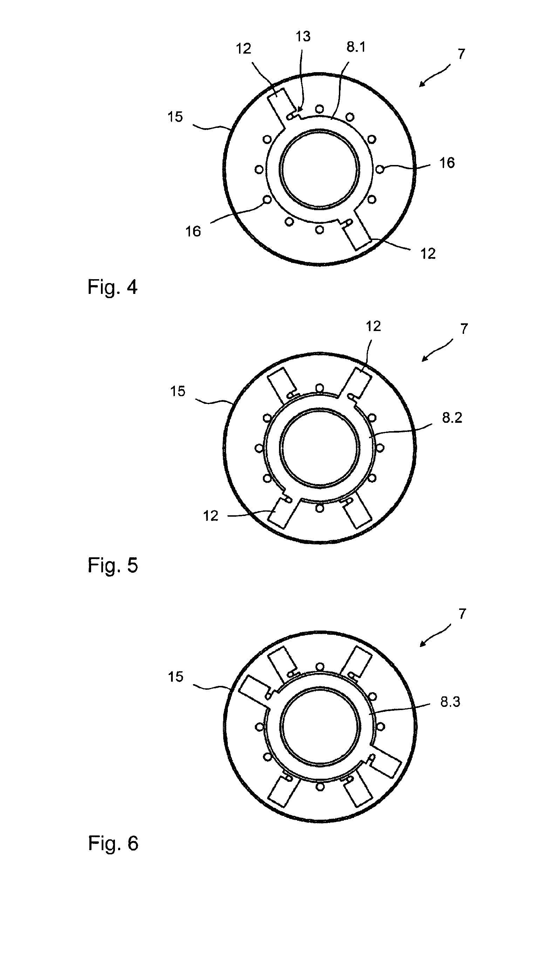

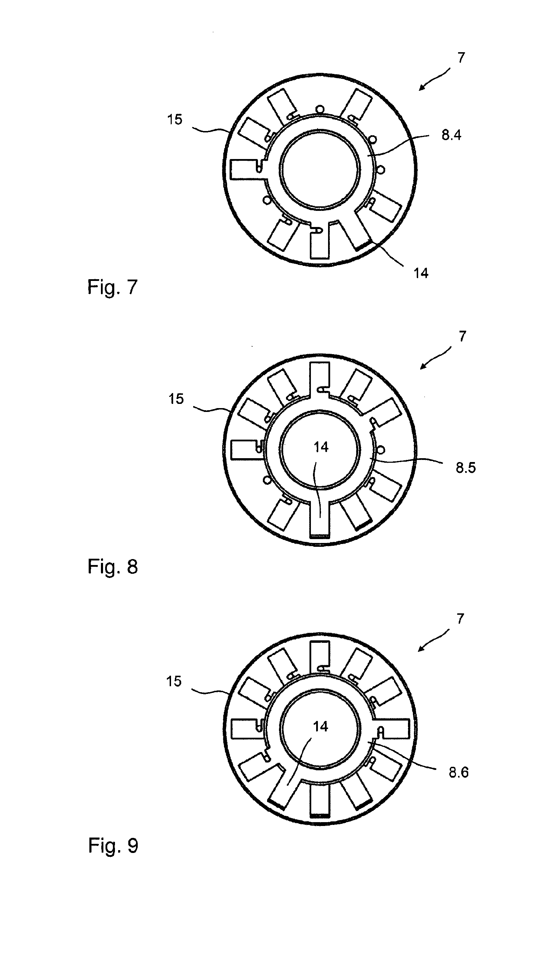

Die Statorwicklungsverschaltung 7 ist in Fig. 2 in perspektivischer Ansicht gezeigt. Fig. 3 zeigt eine Explosionsdarstellung der Statorwicklungsverschaltung 7. Sie besteht im Wesentlichen aus sechs übereinander geschichteten Ringleitern 8.1 bis 8.6. Bei den Ringleitern 8 handelt es sich um koaxial zur Achse 4 des Elektromotors angeordnete Kupferringen, die aus einem Kupferblech ausgestanzt sind. Zwischen zwei aufeinanderfolgenden Ringleitern befindet sich jeweils ein ebenfalls aus Keramik gefertigter Zwischenring 9, der die betreffenden Ringleiter gegeneinander elektrisch isoliert. Zur Herstellung der Statorwicklungsverschaltung 7 werden die Ringleiter 8.1 bis 8.6 und die Zwischenringe 9 abwechselnd aufeinandergeschichtet. Die Fig. 4 bis 9 zeigen unterschiedliche Stadien des Schichtprozesses. Der erste Ringleiter 8.1 liegt in axialer Richtung direkt an dem aus Keramik gefertigten Wicklungsträgerring 15 an. Er weist, ebenso wie die weiteren Ringleiter 8.2 bis 8.6, zwei radial nach außen abstehende Laschen 12 zur elektrischen Kontaktierung zweier Wicklungsdrahtenden 6 auf. Sämtliche Wicklungsdrahtenden 6 sind durch entsprechende Bohrungen 16 des Wicklungsträgerrings 15 in axialer Richtung hindurch geführt. Die Laschen 12 der Ringleiter 8.1 bis 8.6 sind in Umfangsrichtung gesehen derart angeordnet, dass sie jeweils auf der Position einer der Bohrungen 16 zu liegen kommen. Jede der Laschen 12 weist eine im Wesentlichen in Umfangsrichtung verlaufende Ausnehmung 13 auf, die sich direkt über der entsprechenden Bohrung 16 befindet, so dass die Wicklungsdrahtenden durch die Ausnehmungen 13 hindurch geführt und um 90° nach außen auf die jeweilige Lasche 12 umgebogen werden können, wie dies in Fig. 2 beispielhaft für lediglich zwei der Wicklungsdrahtenden 6 gezeigt ist. Die Wicklungsdrahtenden 6 sind mit den zugehörigen Laschen 12 verschweißt.

Die äußeren drei Ringleiter 8.4, 8.5 und 8.6 verfügen zusätzlich zu den beiden Laschen 12 jeweils über eine axial abgebogene Anschlusslasche 14. Die drei Anschlusslaschen 14 dienen zur externen elektrischen Kontaktierung der Statorwicklung 3. Diese umfasst drei Phasenwicklungen, die mittels der Statorwicklungsverschaltung 7 in einer Dreiecksschaltung miteinander verschaltet sind. Die drei Anschlusslaschen 14 sind die einzigen elektrisch kontaktierbaren Teile der Statorwicklungsverschaltung, die aus der in Fig. 1 dargestellten Vergussmasche 10 herausragen. Der gesamte Aufbau des Stators bzw. der Statorwicklungsverschaltung ist äußerst kompakt und stabil. Aufgrund der keramischen Bauteile und der ebenfalls keramischen Vergussmasse wird die Stabilität auch bei sehr hohen Einsatztemperaturen von bis 550 °C gewährleistet.

## Patentansprüche

1. Stator (1) für einen Elektromotor (2), insbesondere für einen Hochtemperatur-Elektromotor, umfassend eine Statorwicklung (3) mit einer Achse (4) und mit mehreren an einem Stirnende (5) der Statorwicklung (3) herausgeführten Wicklungsdrahtenden (6), wobei der Stator (1) eine Statorwicklungsverschaltung (7) mit mehreren Ringleitern (8.1, 8.2, 8.3, 8.4, 8.5, 8.6) umfasst, die am Stirnende (5) der Statorwicklung (3) koaxial zu dieser angeordnet und axial voneinander beabstandet sind, wobei die Ringleiter (8.1, 8.2, 8.3, 8.4, 8.5, 8.6) zur elektrischen Kontaktierung der Wicklungsdrahtenden (6) dienen, **dadurch gekennzeichnet, dass** zwischen axial aufeinanderfolgenden Ringleitern (8.1, 8.2, 8.3, 8.4, 8.5, 8.6) jeweils ein elektrisch isolierender Zwischenring (9) vorgesehen ist, wobei die Ringleiter (8.1, 8.2, 8.3, 8.4, 8.5, 8.6) und die Zwischenringe (9) abwechselnd aufeinander geschichtet sind.

2. Stator (1) nach Anspruch 1, **dadurch gekennzeichnet, dass** die Zwischenringe (9) aus einer Keramik bestehen.

3. Stator (1) nach Anspruch 1 oder 2, **dadurch gekennzeichnet, dass** die Wicklungsdrahtenden (6), die Ringleiter (8.1, 8.2, 8.3, 8.4, 8.5, 8.6) und die Zwischenringe (9) mit einer isolierenden aushärtenden Vergussmasse (10) vergossen sind.

4. Stator (1) nach Anspruch 3, **dadurch gekennzeichnet, dass** die Vergussmasse (10) radial durch eine Ringhülse (11) begrenzt ist, wobei die Ringhülse (11) die Ringleiter (8.1, 8.2, 8.3, 8.4, 8.5, 8.6) und die Zwischenringe (9) umgibt.

5. Stator (1) nach einem der Ansprüche 1 bis 4, **dadurch gekennzeichnet, dass** die Ringleiter (8.1, 8.2, 8.3, 8.4, 8.5, 8.6) jeweils zumindest eine radial abstehende Lasche (12) zur elektrischen Kontaktierung eines der Wicklungsdrahtenden (6) aufweisen.

6. Stator (1) nach Anspruch 5, **dadurch gekennzeichnet, dass** die Ringleiter (8.1, 8.2, 8.3, 8.4, 8.5, 8.6) jeweils zwei Laschen (12) zur elektrischen Kontaktierung von zwei Wicklungsdrahtenden (6) aufweisen, wobei die beiden Laschen (12) eines Ringleiters (8.1, 8.2, 8.3, 8.4, 8.5, 8.6) in Umfangsrichtung voneinander beabstandet an unterschiedlichen Positionen angeordnet sind.

7. Stator (1) nach Anspruch 5 oder 6, **dadurch gekennzeichnet, dass** die Laschen (12) jeweils eine im Wesentlichen in Umfangsrichtung oder tangential verlaufende Ausnehmung (13) aufweisen, wobei zugehörige Wicklungsdrahtenden (6) und Ausnehmungen (13) im gleichen radialen Abstand zur Achse (4) angeordnet sind, und wobei die Wicklungsdrahtenden (6) durch die Ausnehmungen (13) hindurchgeführt und auf die zugehörige Lasche (12) umgebogen sind.

8. Stator (1) nach einem der Ansprüche 5 bis 7, **dadurch gekennzeichnet, dass** die Laschen (12) radial nach außen abstehen.

9. Stator (1) nach einem der Ansprüche 5 bis 8, **dadurch gekennzeichnet, dass** die Wicklungsdrahtenden (6) mit zugehörigen Laschen (12) verschweißt sind.

10. Stator (1) nach einem der Ansprüche 1 bis 9, **dadurch gekennzeichnet, dass** zumindest zwei der Ringleiter (8.4, 8.5, 8.6) eine axial abgebogene Anschlusslasche (14) zur externen elektrischen Kontaktierung aufweisen.

11. Stator (1) nach einem der Ansprüche 1 bis 10, **dadurch gekennzeichnet, dass** der Stator (1) einen Wicklungsträgerring (15) umfasst, wobei der Wicklungsträgerring (15) zwischen der Statorwicklung (3) und den aufeinandergeschichteten Ringleitern (8.1, 8.2, 8.3, 8.4, 8.5, 8.6) angeordnet ist und mehrere Bohrungen (16) aufweist, durch welche die Wicklungsdrahtenden (6) hindurchgeführt sind.

12. Stator (1) nach Anspruch 11, **dadurch gekennzeichnet, dass** die Statorwicklung (3) in radialer Richtung durch eine innerhalb der Statorwicklung (3) angeordnete Stützhülse (19) abgestützt ist, wobei die Stützhülse (19) in eine Aufnahmeausnehmung (20) des Wicklungsträgerrings (15) eingesteckt ist.

13. Stator (1) nach einem der Ansprüche 1 bis 12, **dadurch gekennzeichnet, dass** die Statorwicklung (3) drei Phasenwicklungen aufweist, die in einer Dreiecksschaltung miteinander verschaltet sind.

14. Elektromotor (2) mit einem Stator (1) nach einem der Ansprüche 1 bis 13.
